# EUROPÄISCHE PATENTSCHRIFT

(11) **EP 2 800 769 B1**
(45) Veröffentlichungstag und Bekanntmachung des Hinweises auf die Patenterteilung: **09.12.2015**
(21) Anmeldenummer: 12809693.0
(22) Anmeldetag: 13.12.2012
(51) Int. Cl.: C08G 18/12, C08G 18/40, C08G 18/42, C08J 9/08, C08G 101/00

(54) **VERFAHREN ZUR HERSTELLUNG VON POLYURETHAN-HARTSCHÄUMEN UND POLYISOCYANURAT-HARTSCHÄUMEN**
METHOD FOR PRODUCING POLYURETHANE HARD FOAMS AND POLYISOCYANURATE HARD FOAMS
PROCÉDÉ DE PRODUCTION DE MOUSSES DURES À BASE DE POLYURÉTHANE ET À BASE DE POLYISOCYANURATE

(30) Priorität: 02.01.2012 EP 12150016; 23.03.2012 EP 12160927
(43) Veröffentlichungstag der Anmeldung: 12.11.2014
(73) Patentinhaber: BASF SE, 67056 Ludwigshafen (DE)
(72) Erfinder: KAMPF, Gunnar, 32351 Stemwede-Haldem (DE)
(86) Internationale Anmeldenummer: PCT/EP2012/075347
(87) Internationale Veröffentlichungsnummer: WO 2013/102540

(56) Entgegenhaltungen:
- EP-A1- 2 492 297
- DE-A1-102005 041 763
- US-A- 3 138 562
- US-B1- 6 664 363

## Beschreibung

Die vorliegende Erfindung betrifft ein Verfahren zur Herstellung von Polyurethan-Hartschaumstoffen oder Polyisocyanurat-Hartschaumstoffen unter Verwendung von bestimmten Polyetheresterpolyolen auf Basis aromatischer Dicarbonsäuren. Die vorliegende Erfindung betrifft außerdem die so erhältlichen Hartschaumstoffe sowie deren Verwendung zur Herstellung von Sandwichelementen mit starren oder flexiblen Deckschichten. Darüber hinaus richtet sich die vorliegende Erfindung auf die zugrundeliegenden Polyolkomponenten.

Die Herstellung von Polyurethan-Hartschaumstoffen durch Umsetzung von organischen oder modifizierten organischen Di- oder Polyisocyanaten mit höhermolekularen Verbindung mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literaturveröffentlichungen beschrieben.

Im Rahmen der vorliegenden Offenbarung werden die Begriffe "Polyesterpolyol", "Polyesterol", "Polyesteralkohol" und die Abkürzung "PESOL" gleichbedeutend verwendet.

Bei Einsatz von Polyesterpolyolen ist es üblich, Polykondensate aus aromatischen und/oder aliphatischen Dicarbonsäuren und Alkandiolen und/oder -triolen bzw. Etherdiolen einzusetzen. Es ist aber auch möglich, Polyesterabfälle und hier insbesondere Polyethylenterephthalat (PET)- bzw. Polybutylenterephthalat (PBT)-Abfälle zu verarbeiten. Hierfür sind eine ganze Reihe von Verfahren bekannt und beschrieben. Grundlage einiger Verfahren ist die Umwandlung des Polyesters in einen Diester der Terephthalsäure, z.B. in Dimethylterephthalat. In DE-A 100 37 14 und US-A 5,051,528 werden derartige Umesterungen unter Einsatz von Methanol und Umesterungskatalysatoren beschrieben.

Ferner ist bekannt, dass Terephthalsäure-basierte Ester bezüglich des Brandverhaltens Phthalsäure-basierten Estern überlegen sind, wie zum Beispiel in WO 2010/043624 beschrieben.

Beim Einsatz der Polyesterpolyole, die auf aromatischen Carbonsäuren oder deren Derivaten basieren (wie Terephthalsäure oder Phthalsäureanhydrid), zur Herstellung von Polyurethan (PU)-Hartschaumstoffen macht sich oft die hohe Viskosität der Polyesterpolyole negativ bemerkbar, da somit die Viskosität der Abmischungen mit den Polyestern ansteigt und dadurch die Vermischung mit dem Isocyanat deutlich erschwert wird.

Aus der EP-A 1 058 701 sind aromatische Polyesterpolyole mit niedriger Viskosität bekannt, die durch Umesterung eines Gemisches aus Phtalsäurederivaten, Diolen, Polyolen und hydrophoben fettbasierten Materialien erhalten werden.

Zudem kann es in bestimmten Systemen zur Herstellung von PU-Hartschaumstoffen, zum Beispiel unter Verwendung von Glycerin als höherfunktionelle alkoholische Polyester-Komponente, zu Problemen mit einer unzureichenden Maßhaltigkeit kommen, d.h. das Schaumstoff-Produkt verformt sich nach der Entformung oder nach der Druckstrecke bei Verarbeitung nach dem Doppelbandverfahren deutlich.

Auch ist das Problem des Verhaltens von PU-Hartschaumstoffen im Brandfall bisher nicht für alle Systeme befriedigend gelöst. Beispielsweise kann sich beim Einsatz von Trimethylolpropan (TMP) als höherfunktionelle alkoholische Polyester-Komponente im Brandfall eine toxische Verbindung bilden.

Ein generelles Problem bei der Herstellung von Hartschaumstoffen ist die Ausbildung von Oberflächendefekten, vorzugsweise an der Grenzfläche zu metallischen Deckschichten. Diese Schaumoberflächendefekte bedingen die Ausbildung einer unebenen Metalloberfläche bei Sandwichelementen und führen somit oft zu einer optischen Beanstandung des Produkts. Eine Verbesserung der Schaumoberfläche vermindert die Häufigkeit des Auftretens solcher Oberflächendefekte und führt somit zu einer optischen Verbesserung der Oberfläche von Sandwichelementen.

Polyurethan-Hartschaumstoffe zeigen häufig eine hohe Sprödigkeit, was sich beim Zuschnitt der Schäume entweder durch eine starke Staubentwicklung und hohe Empfindlichkeit des Schaums zeigt, oder im Falle des Sägens des Schaumstoffs, vor allem beim Sägen von Verbundelementen mit metallischen Deckschichten und einem Kern aus einem Polyisocyanuratschaum zur Rissbildung im Schaum führen kann.

Ferner ist es allgemein wünschenswert, Systeme mit einer möglichst hohen Eigenreaktivität bereitzustellen, um den Einsatz von Katalysatoren zu minimieren.

Aufgabe der Erfindung ist es, Polyesterpolyole auf Basis aromatischer Dicarbonsäuren für die Herstellung von PU-Hartschaumstoffe mit geringer Sprödigkeit bereitzustellen. Aufgabe der Erfindung ist es weiterhin, eine Polyolkomponente, die die Polyesterpolyole enthält, bereitzustellen, welche eine hohe Eigenreaktivität aufweist.

Weitere Aufgaben waren zudem, die Maßhaltigkeit der PU-Endprodukte zu verbessern, oder jedenfalls nicht zu verschlechtern, und auch die Bildung von toxischen Verbindungen im Brandfall zu verringern, zumindest jedoch nicht zu verschlechtern. Weiterhin sollte die Verarbeitbarkeit im Bezug auf die Ausbildung von Oberflächendefekten verbessert werden.

Darüber hinaus sollen die Polyesterpolyole eine niedrige Viskosität aufweisen, um bei der Herstellung der PU-Hartschaumstoffe gut dosiert und vermischt werden zu können. Auch die Löslichkeit von Treibmitteln, zum Beispiel von Pentan in der Polyolkomponente, sollte möglichst gut sein.

Gelöst wird die Aufgabe durch ein Verfahren zur Herstellung von Polyurethan-Hartschaumstoffen oder Polyisocyanurat-Hartschaumstoffen umfassend die Umsetzung von
A) mindestens einem Polyisocyanat,
B) mindestens einem Polyetheresterpolyol, erhältlich durch Veresterung von b1)
   10 bis 70 Mol-% einer Dicarbonsäurezusammensetzung, enthaltend
      b11) 50 bis 100 Mol-%, bezogen auf die Dicarbonsäurezusammensetzung, einer oder mehrerer aromatischer Dicarbonsäuren oder Derivate derselben,
      b12) 0 bis 50 Mol-%, bezogen auf die Dicarbonsäurezusammensetzung b1), einer oder mehrerer aliphatischer Dicarbonsäuren oder Derivate derselben,
   b2) 2 bis 30 Mol-% einer oder mehrerer Fettsäuren und/oder Fettsäurederivate,
   b3) 10 bis 70 Mol-% eines oder mehrerer aliphatischer oder cycloaliphatischer Diole mit 2 bis 18 C-Atomen oder Alkoxylate derselben,
   b4) 2 bis 50 Mol-% eines Polyetherpolyols mit einer Funktionalität größer oder gleich 2 und einer OH- Zahl von 300 bis 1250 mg KOH/g, hergestellt durch Alkoxylierung eines Polyols mit einer Funktionalität größer 2,
   jeweils bezogen auf die Gesamtmenge der Komponenten b1) bis b4), wobei sich die Komponenten b1) bis b4) zu 100 Mol-% addieren,
C) gegebenenfalls weiteren Polyesterpolyolen, die sich von denen der Komponente B) unterscheiden,
D) mindestens ein Polyetherpolyol, und
E) gegebenenfalls Flammschutzmitteln,
F) einem oder mehreren Treibmitteln,
G) Katalysatoren, und
H) gegebenenfalls weiteren Hilfsmitteln oder Zusatzstoffen,
wobei das Massenverhältnis der Summe der Komponenten B) und gegebenenfalls C) zu Komponente D) mindestens 7 beträgt.

Gegenstand der vorliegenden Erfindung ist außerdem eine Polyolkomponente enthaltend die vorgenannten Komponenten B) bis H), wobei das Massenverhältnis der Summe der Komponenten B) und gegebenenfalls C) zu Komponente D) mindestens 7 beträgt.

Weitere Gegenstände der vorliegenden Erfindung sind Polyurethan-Hartschaumstoffe und Polyisocyanurat-Hartschaumstoffe, erhältlich nach dem erfindungsgemäßen Verfahren sowie deren Verwendung zur Herstellung von Sandwich-Elementen mit starren oder flexiblen Deckschichten.

Die Erfindung wird nachfolgend näher erläutert. Kombinationen von bevorzugten Ausführungsformen verlassen den Rahmen der vorliegenden Erfindung nicht. Dies gilt insbesondere in Bezug auf die als bevorzugt gekennzeichneten Ausführungsformen der einzelnen Komponenten A) bis H) der vorliegenden Erfindung. Die nachfolgend im Rahmen von Komponente B) bis H) aufgeführten Ausführungsformen beziehen sich sowohl auf das erfindungsgemäße Verfahren und die so erhältlichen Hartschaumstoffe als auch auf die erfindungsgemäßen Polyolkomponenten.

### Komponente B

Im Rahmen der vorliegenden Offenbarung sind die Begriffe "Polyesterpolyol" und "Polyesterol" gleichbedeutend, ebenso die Begriffe "Polyetherpolyol" und "Polyetherol".

Vorzugsweise enthält die Komponente b11) mindestens eine Verbindung, die aus der Gruppe bestehend aus Terephthalsäure, Dimethylterephthalat (DMT), Polyethylenterephthalat (PET), Phthalsäure, Phthalsäureanhydrid (PSA) und Isophthalsäure ausgewählt wird. Besonders bevorzugt enthält die Komponente b11) mindestens eine Verbindung aus der Gruppe bestehend aus Terephthalsäure, Dimethylterephthalat (DMT), Polyethylenterephthalat (PET) und Phthalsäureanhydrid (PSA). Ganz besonders bevorzugt enthält die Komponente b11) Phthalsäureanhydrid, Dimethylterephthalat (DMT), Terephthalsäure oder Gemische daraus. Die aromatischen Dicarbonsäuren oder deren Derivate der Komponente b11) werden besonders bevorzugt aus den vorgenannten aromatischen Dicarbonsäuren bzw. Dicarbonsäurederivaten und im speziellen aus Terephthalsäure und/oder Dimethylterephthalat (DMT) ausgewählt. Terephthalsäure und/oder DMT in Komponente b11) führt zu Polyetherestern B) mit besonders guten Brandschutzeigenschaften. Terephthalsäure ist dabei ganz besonders bevorzugt, da im Gegensatz zu DMT die Entstehung von störenden Abspaltungsprodukten vermieden werden kann.

Im Allgemeinen sind aliphatische Dicarbonsäuren oder -derivate (Komponente b12) zu 0 bis 30 Mol-%, bevorzugt 0 bis 10 Mol-% in der Dicarbonsäurezusammensetzung b1) enthalten. Besonders bevorzugt enthält die Dicarbonsäurezusammensetzung b1) keine aliphatischen Dicarbonsäuren oder Derivate derselben und besteht somit zu 100 Mol-% aus einer oder mehreren aromatischen Dicarbonsäuren oder deren Derivate, wobei die vorgenannten bevorzugt sind.

Vorzugsweise wird die Komponente b2) in Mengen von 3 bis 20 Mol-%, besonders bevorzugt 5 bis 18 Mol-% eingesetzt.

Vorzugsweise wird die Komponente b3) in Mengen von 20 bis 60 Mol-%, bevorzugt von 25 bis 55 Mol-%, besonders bevorzugt von 30 bis 45 Mol-% eingesetzt.

Vorzugsweise wird die Komponente b4) in Mengen von 2 bis 40 Mol-%, bevorzugt 8 bis 35 Mol-%, besonders bevorzugt 15 bis 25 Mol-% eingesetzt.

In einer Ausführungsform der Erfindung besteht die Fettsäure oder das Fettsäurederivat b2) aus einer Fettsäure bzw. Fettsäuremischung, einem oder mehreren GlycerinEstern von Fettsäuren, bzw. von Fettsäuremischungen und/oder einem oder mehreren Fettsäuremonoestern, wie beispielsweise Biodiesel oder Methylestern von Fettsäuren, besonders bevorzugt besteht die Komponente b2) aus einer Fettsäure bzw. Fettsäuremischung und/oder einem oder mehreren Fettsäuremonoestern, spezifischer besteht die Komponente b2) aus einer Fettsäure bzw. Fettsäuremischung und/oder Biodiesel und im speziellen besteht die Komponente b2) aus einer Fettsäure bzw. Fettsäuremischung.

In einer bevorzugten Ausführungsform der Erfindung ist die Fettsäure oder das Fettsäurederivat b2) ausgewählt aus der Gruppe bestehend aus Rizinusöl, Polyhydroxyfettsäuren, Ricinolsäure, Stearinsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, tierischem Talg, wie beispielsweise Rindertalg, Fettsäuren, Hydroxyl-modifizierten Fettsäuren, Biodiesel, Methylestern von Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure sowie Mischfettsäuren.

In einer besonders bevorzugten Ausführungsform der vorliegenden Erfindung ist die Fettsäure oder das Fettsäurederivat b2) Ölsäure, Biodiesel, Sojaöl, Rapsöl oder Talg, besonders bevorzugt Ölsäure, Biodiesel, Sojaöl, Rapsöl oder Rindertalg, spezifischer Ölsäure oder Biodiesel und im speziellen Ölsäure. Die Fettsäure oder das Fettsäurederivat verbessert unter anderem die Treibmittellöslichkeit bei der Herstellung von Polyurethanhartschaumstoffen.

Ganz besonders bevorzugt umfasst Komponente b2) kein Triglycerid, insbesondere kein Öl oder Fett. Das durch die Veresterung bzw. Umesterung freiwerdende Glycerin aus dem Triglycerid verschlechtert wie oben ausgeführt die Maßhaltigkeit des Hartschaums. Bevorzugte Fettsäuren und Fettsäurederivate sind im Rahmen von Komponente b2) insofern die Fettsäuren selbst sowie Alkylmonoester von Fettsäuren oder Alkylmonoester von Fettsäuregemischen, insbesondere die Fettsäuren selbst und/oder Biodiesel.

Vorzugsweise ist das aliphatische oder cycloaliphatische Diol b3) ausgewählt aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-pentandiol und Alkoxylaten derselben. Besonders bevorzugt ist das aliphatische Diol b3) Monoethylenglykol oder Diethylenglykol, insbesondere Diethylenglykol.

Komponente b4) kann insbesondere mit Hilfe von Kaliumhydroxid oder eines Amins als Katalysator hergestellt werden. Die Verwendung von KOH erfordert jedoch einen zusätzlichen Aufarbeitungsschritt. In einer bevorzugten Ausführungsform der vorliegenden Erfindung ist der Aminkatalysator zur Herstellung der Komponente b4) ausgewählt aus der Gruppe enthaltend Dimethylethanolamin (DMEOA), Imidazol und Imidazolderivate sowie Mischungen daraus, besonders bevorzugt Imidazol.

Vorzugsweise wird ein solches Polyetherpolyol b4) mit einer Funktionalität größer 2 eingesetzt, das durch Alkoxylierung eines Polyols mit einer Funktionalität größer oder gleich 3 hergestellt wurde.

Erfindungsgemäß weist das Polyetherpolyol b4) eine Funktionalität von größer als 2 auf. Vorzugsweise weist es eine Funktionalität größer oder gleich 2,7, insbesondere größer oder gleich 2,9 auf. Im Allgemeinen weist es eine Funktionalität von kleiner oder gleich 6, bevorzugt kleiner oder gleich 5, besonders bevorzugt kleiner oder gleich 4 auf.

Vorzugsweise wird das Polyetherpolyol b4) ausgewählt aus der Gruppe bestehend aus den Umsetzungsprodukten von Sorbit, Polyglycerin, Glycerin, Trimethylolpropan (TMP), Pentaerythrit oder deren Gemische mit einem Alkylenoxid.

In einer Ausführungsform der vorliegenden Erfindung ist das Polyetherpolyol b4) erhältlich durch Umsetzung eines Polyols mit einer Funktionalität von größer als 2 mit Ethylenoxid und/ oder Propylenoxid, bevorzugt mit Ethylenoxid. Besonders bevorzugt ist das Polyetherpolyol b4) erhältlich durch Alkoxylierung mit Ethylenoxid, was zu Polyurethan-Hartschaumstoffen mit verbesserten Brandschutzeigenschaften führt.

Vorzugsweise ist das Polyetherpolyol b4) erhältlich durch Alkoxylierung, vorzugsweise Ethoxylierung, eines Polyols, ausgewählt aus der Gruppe bestehend aus Sorbit, Pentaerythrit, Trimethylolpropan, Glycerin, Polyglycerin und deren Gemischen, besonders bevorzugt eines Polyols, ausgewählt aus der Gruppe bestehend aus Trimethylolpropan und Glycerin.

In einer speziellen Ausführungsform der Erfindung besteht das Polyetherpolyol b4) aus dem Umsetzungsprodukt von Glycerin mit Ethylenoxid und/ oder Propylenoxid, bevorzugt mit Ethylenoxid. Hierdurch ergibt sich eine besonders hohe Lagerstabilität der Komponente B.

In einer weiteren speziellen Ausführungsform der Erfindung besteht das Polyetherpolyol b4) aus dem Umsetzungsprodukt von Trimethylolpropan mit Ethylenoxid und/oder Propylenoxid, bevorzugt mit Ethylenoxid. Hierdurch ergibt sich ebenfalls eine besonders hohe Lagerstabilität der Komponente B).

Erfindungsgemäß weist das Polyetherpolyol b4) eine OH-Zahl im Bereich von 300 bis 1250 mg KOH/g, bevorzugt 300 bis 950 mg KOH/g, besonders bevorzugt 500 bis 800 mg KOH/g auf. In diesem Bereich lassen sich besonders günstige mechanische Eigenschaften sowie Brandschutzeigenschaften erzielen.

Vorzugsweise werden pro kg Polyetheresterpolyol B) mindestens 200 mmol, besonders bevorzugt mindestens 400 mmol, insbesondere bevorzugt mindestens 600 mmol, speziell bevorzugt mindestens 800 mmol, im speziellen mindestens 1000 mmol der Komponente b4) verwendet.

In einer besonders bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 800 mg KOH/g, bevorzugt 500 bis 650 mg KOH/g, liegt.

In einer insbesondere bevorzugten Ausführungsform der Erfindung besteht das Polyetherpolyol b4) aus dem Umsetzungsprodukt von Trimethylolpropan oder Glycerin, bevorzugt Glycerin, mit Ethylenoxid, wobei die OH-Zahl des Polyetherpolyols b4) im Bereich von 500 bis 800 mg KOH/g, bevorzugt 500 bis 650 mg KOH/g liegt, und das aliphatische oder cycloaliphatische Diol b3) ist Diethylenglykol, und die Fettsäure oder das Fettsäurederivat b2) ist Ölsäure.

Vorzugsweise weist das Polyetheresterpolyol B) eine zahlengewichtete mittlere Funktionalität von größer oder gleich 2, bevorzugt von größer als 2, besonders bevorzugt von größer als 2,2 und insbesondere von größer als 2,3 auf, was zu einer höheren Vernetzungsdichte des damit hergestellten Polyurethans und damit zu besseren mechanischen Eigenschaften des Polyurethanschaums führt.

Zur Herstellung der Polyetheresterpolyole können die aliphatischen und aromatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280°C, vorzugsweise 180 bis 260°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyetheresterpolyole werden die organischen Polycarbonsäuren und/oder -derivate und mehrwertigen Alkohole vorteilhafterweise im Molverhältnis von 1 : 1 bis 2,2, vorzugsweise 1 : 1,05 bis 2,1 und besonders bevorzugt 1 : 1,1 bis 2,0 polykondensiert.

Die erhaltenen Polyetheresterpolyole weisen im Allgemeinen ein zahlenmittleres Molekulargewicht von 300 bis 3000, vorzugsweise 400 bis 1000 und insbesondere 450 bis 800 auf.

Im Allgemeinen ist der Anteil der erfindungsgemäßen Polyetheresterpolyole B) mindestens 10 Gew.-%, bevorzugt mindestens 20 Gew.-%, besonders bevorzugt mindestens 40 Gew.-% und im Speziellen mindestens 50 Gew.-% bezogen auf die Summe der Komponenten B) bis H).

Zur Herstellung der Polyurethan-Hartschaumstoffe nach dem erfindungsgemäßen Verfahren finden, neben den oben beschriebenen speziellen Polyesterpolyolen (Polyetheresterpolyole B), die an sich bekannten Aufbaukomponenten Verwendung, zu denen im Einzelnen folgendes auszuführen ist.

### Komponente A

Unter Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, so beträgt der zahlengewichtete Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3, 3,5-trimethyl-5-iso-cyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate der Komponente A) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbeson-dere 2,2'-MDI oder 2,4'-MDI oder 4,4'-MDI oder oligomeres MDI, das auch als Polyphe-nylpolymethylenisocyanat bezeichnet wird, oder Mischungen aus zwei oder drei der vor-genannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unter-schiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente A) mindestens zwei, insbesondere mindestens 2,2 und besonders bevorzugt mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Iso-cyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,4 auf.

Die Viskosität der eingesetzten Komponente A) kann in einem weiten Bereich variieren. Vor-zugsweise weist die Komponente A) eine Viskosität von 100 bis 3000 mPa*s, besonders bevorzugt von 200 bis 2500 mPa*s, auf.

### Komponente C

Geeignete Polyesterpolyole C), die sich von den Polyetheresterpolyolen B) unterscheiden, können beispielsweise aus organischen Dicarbonsäuren mit 2 bis 12 Kohlenstoffatomen, vorzugsweise aromatischen, oder Gemischen aus aromatischen und aliphatischen Dicarbonsäuren und mehrwertigen Alkoholen, vorzugsweise Diolen, mit 2 bis 12 Kohlenstoffatomen, vorzugsweise 2 bis 6 Kohlenstoffatomen hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Verwendet werden können ebenso Derivate dieser Dicarbonsäuren, wie beispielsweise Dimethylterephthalat. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der weiteren Polyesterpolyole C) kommen auch biobasierte Ausgangsstoffe und/oder deren Derivate in Frage, wie z. B. Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure. Im Allgemeinen beträgt das Massenverhältnis der Polyetheresterpolyole B) zu den Polyesterpolyole C) mindestens 0,1, bevorzugt mindestens 0,25, besonders bevorzugt mindestens 0,5 und insbesondere mindestens 0,8.

In einer insbesondere bevorzugten Ausführungsform werden keine weiteren Polyesterpolyole C) mit umgesetzt.

### Komponente D

Erfindungsgemäß wird als Komponente D) mindestens ein Polyetherpolyole D) verwendet. Die Polyetherole D) können die nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl-und N-Ethyldiethanolamin, und Trialkanolamine, wie z.B. Triethanolamin, und Ammoniak.

Vorzugsweise verwendet werden zwei oder mehrwertige Alkohole, wie Ethandiol, Pro-pandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Die Polyetherpolyole D), vorzugsweise Polyoxypropylenpolyole und Polyoxyethylenpolyole, besonders bevorzugt Polyoxyethylenpolyole, besitzen eine Funktionalität von vorzugsweise 2 bis 6, besonders bevorzugt 2 bis 4, insbesondere 2 bis 3 und im Speziellen 2 und zahlenmittlere Molekulargewichte von 150 bis 3000 g/mol, vorzugsweise 200 bis 2000 g/mol und insbesondere 250 bis 1000 g/mol.

In einer bevorzugten Ausführungsform der Erfindung wird ein alkoxyliertes Diol, bevorzugt ein ethoxyliertes Diol, beispielsweise ethoxylierter Ethylenglykol, als Polyetherpolyol D) mitverwendet, vorzugsweise handelt es sich dabei um Polyethylenglykol.

In einer speziellen Ausführungsform der Erfindung besteht die Polyetherol-Komponente D) ausschließlich aus Polyethylenglykol, vorzugsweise mit einem zahlenmittleren Molekulargewicht von 250 bis 1000 g/mol.

Im Allgemeinen beträgt der Anteil der Polyetherpolyole D) 0 bis 11 Gew.-%, bevorzugt 2 bis 9 Gew.-%, besonders bevorzugt 4 bis 8 Gew.-%, bezogen auf die Summe der Komponenten B) bis H).

Erfindungsgemäß ist das Massenverhältnis der Summe der Komponenten B) und C) zu der Komponente D) größer als 7, bevorzugt größer als 7,5, besonders bevorzugt größer als 8, insbesondere bevorzugt größer als 10 und speziell bevorzugt größer als 12.

Weiterhin ist das erfindungsgemäße Massenverhältnis der Summe der Komponenten B) und C) zu der Komponente D) kleiner als 80, bevorzugt kleiner als 40, besonders bevorzugt kleiner als 30, insbesondere bevorzugt kleiner als 20, speziell bevorzugt kleiner als 16 und im speziellen kleiner als 14.

### Komponente E

Als Flammschutzmittel E) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)phosphat, Tris-(2-chlorpropyl)phosphat (TCPP), Tris(1,3-dichlorpropyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Bevorzugte Flammschutzmittel weisen keine mit Isocyanatgruppen reaktive Gruppen auf. Vorzugsweise sind die Flammschutzmittel bei Raumtemperatur flüssig. Besonders bevorzugt sind TCPP, DEEP, TEP, DMPP und DPK.

Im Allgemeinen beträgt der Anteil des Flammschutzmittels E), 2 bis 50 Gew.-%, bevorzugt 5 bis 30 Gew.-%, besonders bevorzugt 8 bis 25 Gew.-%, bezogen auf die Komponenten B) bis H).

### Komponente F

Zu Treibmitteln F), welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den Polyisocyanaten A) inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und isoButan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine halogenierten Kohlenwasserstoffe als Treibmittel verwendet. Vorzugsweise werden als chemische Treibmittel Wasser, Ameisensäure-Wasser-Mischungen oder Ameisensäure verwendet, besonders bevorzugte chemische Treibmittel sind Ameisensäure-Wasser-Mischungen oder Ameisensäure. Vorzugsweise werden als physikalische Treibmittel Pentanisomere, bzw. Mischungen von Pentanisomeren verwendet.

Die chemischen Treibmittel können dabei alleine, d.h. ohne Zusatz von physikalischen Treibmitteln, oder zusammen mit physikalischen Treibmitteln verwendet werden. Vorzugsweise werden die chemischen Treibmittel zusammen mit physikalischen Treibmitteln verwendet, wobei die Verwendung von Ameisensäure-Wasser-Mischungen oder reiner Ameisensäure zusammen mit Pentanisomeren oder Gemischen aus Pentanisomeren bevorzugt sind.

Die Treibmittel sind entweder ganz oder teilweise in der Polyolkomponente (d.h. B+C+D+E+F+G+H) gelöst oder werden direkt vor dem Verschäumen der Polyolkomponente über einen Statikmischer zudosiert. Für gewöhnlich liegen Wasser, Ameisensäure-Wasser-Mischungen oder Ameisensäure ganz oder teilweise in der Polyolkomponente gelöst vor und wird das physikalische Treibmittel (beispielsweise Pentan) und gegebenenfalls der Rest des chemischen Treibmittels "online" dosiert.

Zu der Polyolkomponente wird in situ Pentan, eventuell ein Teil des chemischen Treibmittels, sowie teilweise oder vollständig der Katalysator zugegeben. Die Hilfs- und Zusatzstoffe, wie auch die Flammschutzmittel sind bereits im Polyolblend enthalten.

Die eingesetzte Menge des Treibmittels bzw. der Treibmittelmischung liegt bei 1 bis 45 Gew.-%, vorzugsweise 1 bis 30 Gew.-%, besonders bevorzugt 1,5 bis 20 Gew.-%, jeweils bezogen auf die Summe der Komponenten B) bis H).

Dient Wasser, Ameisensäure oder eine Ameisensäure-Wasser-Mischung als Treibmittel, so wird es vorzugsweise der Polyolkomponente (B+C+D+E+F+G+H) in einer Menge von 0,2 bis 10 Gew.-%, bezogen auf die Komponente B), zugesetzt. Der Zusatz des Wassers, der Ameisensäure oder der Ameisensäure-Wasser-Mischung kann in Kombination mit dem Einsatz der anderen beschriebenen Treibmittel erfolgen. Bevorzugt wird Ameisensäure oder eine Ameisensäure-Wasser-Mischung in Kombination mit Pentan eingesetzt.

### Komponente G

Als Katalysatoren G) zur Herstellung der Polyurethan-Hartschaumstoffe werden insbesondere Verbindungen verwendet, die die Reaktion der reaktiven Wasserstoffatome, insbesondere Hydroxylgruppen, enthaltenden Verbindungen der Komponenten B) bis H) mit den Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo.(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gew.-teile Katalysator bzw. Katalysatorkombination, bezogen (d. h. gerechnet) auf 100 Gewichtsteile der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966,1983 und 1993, entnommen werden.

### Komponente H

Der Reaktionsmischung zur Herstellung der Polyurethan-Hartschaumstoffe können gegebenenfalls noch weitere Hilfsmittel und/oder Zusatzstoffe H) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 10 Gew.-teile, bezogen (d. h. gerechnet) auf 100 Gew.-Teile der Komponente B), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A) bis H), zugegeben, wobei jedoch der Gehalt an Matten, Vliesen und Geweben aus natürlichen und synthetischen Fasern Werte bis 80 Gew.-%, bezogen auf das Gewicht der Komponenten A) bis H), erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Ein weiterer Gegenstand der vorliegenden Erfindung ist eine Polyolkomponente enthaltend:
10 bis 90 Gew.-% der Polyetheresterpolyole B),
0 bis 60 Gew.-% der weiteren Polyesterpoylole C),
0,1 bis 11 Gew.-% der Polyetherpolyole D),
2 bis 50 Gew.-% Flammschutzmittel E),
1 bis 45 Gew.-% Treibmittel F),
0,5 bis 10 Gew.-% Katalysatoren G), und
0,5 bis 20 Gew.-% weitere Hilfs- und Zusatzstoffe H),
jeweils wie vorstehend definiert und jeweils bezogen auf das Gesamtgewicht der Komponenten B) bis H), wobei sich die Gew.-% zu 100 Gew.-% ergänzen, und wobei das Massenverhältnis der Summe der Komponenten B) und C) zu Komponente D) mindestens 7 beträgt.

Besonders bevorzugt umfasst die Polyolkomponente
50 bis 90 Gew.-% der Polyetheresterpolyole B),
0 bis 20 Gew.-% der weiteren Polyesterpoylole C),
2 bis 9 Gew.-% der Polyetherpolyole D),
5 bis 30 Gew.-% Flammschutzmittel E),
1 bis 30 Gew.-% Treibmittel F),
0,5 bis 10 Gew.-% Katalysatoren G), und
0,5 bis 20 Gew.-% weitere Hilfs- und Zusatzstoffe H),
jeweils wie vorstehend definiert und jeweils bezogen auf das Gesamtgewicht der Komponenten B) bis H), wobei sich die Gew.-% zu 100 Gew.-% ergänzen, und wobei das Massenverhältnis der Summe der Komponenten B) und C) zu Komponente D) mindestens 7,5 beträgt.

Weiterhin ist das erfindungsgemäße Massenverhältnis der Summe der Komponenten B) und gegebenenfalls C) zu der Komponente D) in den erfindungsgemäßen Polyolkomponenten vorzugsweise kleiner als 80, bevorzugt kleiner als 40, besonders bevorzugt kleiner als 30, insbesondere bevorzugt kleiner als 20, speziell bevorzugt kleiner als 16 und im speziellen kleiner als 14.

Zur Herstellung der erfindungsgemäßen Polyurethan-Hartschaumstoffe werden die gegebenenfalls modifizierten organischen Polyisocyanate A), die speziellen erfindungsgemäßen Polyetheresterpolyole B), gegebenenfalls die weiteren Polyesterpolyole C), die Polyetherole D) und die weiteren Komponenten E) bis H) in solchen Mengen vermischt, dass das Äquivalenzverhältnis von NCO-Gruppen der Polyisocyanate A) zur Summe der reaktiven Wasserstoffatome der Komponenten B), gegebenenfalls C) sowie D) bis H), 1 bis 6:1, vorzugsweise 1,6 bis 5:1 und insbesondere 2,5 bis 3,5:1, beträgt.

Die Erfindung wird durch die nachstehenden Beispiele näher erläutert.

### Beispiele

Es wurden die nachstehenden Polyesterpolyole (Polyesterole 1 und 3) bzw. Polyetheresterpolyole (Polyesterol 2 und Polyesterol 4) eingesetzt.

Polyesterol 1 (Vergleich): Veresterungsprodukt von 34 mol-% Terephthalsäure, 9 mol% Ölsäure, 40 mol% Diethylenglykol und 17 mol% Glyzerin mit einer Hydroxylfunktionalität von 2,33, einer Hydroxylzahl von 244 mg KOH/g und einem Ölsäuregehalt im Polyesterol von 20,3 Gewichts-%.

Polyesterol 2 (erfindungsgemäß): Veresterungsprodukt von 31 mol-% Terephthalsäure, 8 mol-% Ölsäure, 43 mol-% Diethylenglykol und 18 mol-% eines Polyethers auf Basis von Glyzerin und Ethylenoxid mit einer OH-Funktionalität von 3 und einer Hydroxylzahl von 535 mg KOH/g. Der Polyester weist eine Hydroxylfunktionalität von 2,31, eine Hydroxylzahl von 238 mg KOH/g und einen Ölsäuregehalt im Polyesterol von 14,7 Gewichts-% auf.

Polyesterol 3 (Vergleich): Veresterungsprodukt von 30,5 mol-% Phthalsäureanhydrid, 12 mol-% Ölsäure, 39,5 mol-% Diethylenglykol und 18 mol-% Trimethylolpropan mit einer Hydroxylfunktionalität von 2,22, einer Hydroxylzahl von 247 mg KOH/g und einem Ölsäuregehalt im Polyesterol von 24,9 Gewichts-%.

Polyesterol 4 (erfindungsgemäß): Veresterungsprodukt von 25 mol-% Phthalsäureanhydrid, 15 mol-% Ölsäure, 37 mol-% Diethylenglykol und 23 mol-% eines Polyethers auf Basis Trimethylolpropan und Ethylenoxid mit einer OH-Funktionalität von 3 und einer Hydroxylzahl von 610 mg KOH/g. Der Polyester weist eine Hydroxylfunktionalität von 2,22, eine Hydroxylzahl von 244 mg KOH/g und einen Ölsäuregehalt im Polyesterol von 24,5 Gewichts-% auf.

### Bestimmung von Härtung und Sprödigkeit des Polyurethan-Hartschaumstoffs

Die Härtung wurde mit dem Bolzentest ermittelt. Dazu wurde 2,5; 3; 4; 5; 6 und 7 Minuten nach Vermischung der Komponenten des Polyurethan-Schaumstoffs in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs.

Als Maß für die Sprödigkeit des Polyisocyanurat-Hartschaumstoffes wurde der Zeitpunkt ermittelt, bei dem die Oberfläche des Hartschaumstoffes beim Bolzentest sichtbare Bruchzonen aufwies (Bruch beim Bolzentest). Ferner wurde die Sprödigkeit direkt nach der Verschäumung durch Drücken des Schaums subjektiv bestimmt (Sprödigkeit subjektiv) und gemäß einem Notensystem von 1 bis 6 beurteilt. 1 bedeutet, dass der Schaum kaum spröde ist, 6 bedeutet, dass der Schaum eine hohe Sprödigkeit aufweist.

### Bestimmung der Eigenreaktivität der Polyurethansysteme

Die nachfolgend beschriebenen Polyurethansysteme wurden durch Variation der Polyurethan-Katalysatorkonzentration auf eine einheitliche Abbindezeit eingestellt. Wurde bei einem System eine geringere Katalysatorkonzentration benötigt, bedeutete dies, dass das System eine höhere Eigenreaktivität aufwies.

### Beispiele 1 und 2 sowie Vergleichsbeispiele 1 und 2

### Herstellung von Polyurethan-Hartschaumstoffen (Variante 1)

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100 : 190 verschäumt.

### Polyolkomponente:

| | |
|---|---|
| 79 Gewichtsteile | Polyesterol gemäß Beispielen bzw. Vergleichsbeispielen |
| 6 Gewichtsteile | Polyetherol aus ethoxyliertem Ethylenglykol mit einer Hydroxyfunktionalität von 2 und einer Hydroxyzahl von 190 mg KOH/g |
| 13 Gewichtsteile | Flammschutzmittel Trischlorisopropylphosphat (TCPP) |
| 2,0 Gewichtsteile | Stabilisator Tegostab B8443 (siliconhaltiger Stabilisator) |

### Zusatzstoffe:

| | |
|---|---|
| 15,0 Gewichtsteile | Pentan S 80:20 (bestehend aus 80 Gew.% n-Pentan und 20 Gew.-% Iso-Pentan) |
| ca. 1,9 Gewichtsteile | Wasser |
| 1,6 Gewichtsteile | Kaliumacetat-Lösung (47 Gew.-% in Ethylenglykol) |
| weiterhin | Bis(2-dimethylaminoethyl)ether-Lösung (70 Gew.-% in Dipropylenglykol) zum Einstellen der Abbindezeiten, im Folgenden auch Katalysator 1 genannt. |

### Isocyanatkomponente:

190 Gewichtsteile *Lupranat® M50 (polymeres Methylendiphenyldiisocyanat (PMDI), mit einer Viskosität von ca. 500 mPa*s bei* 25 °C *von BASF SE)*

Die Komponenten wurden mittels eines Laborrührwerks intensiv vermischt. Die Rohdichte wurde dabei bei konstantem Pentangehalt von 15,0 Teilen durch Variation des Wassergehalts auf 32 +/- 1 g/L eingestellt. Die Abbindezeit wurde ferner auf 49 +/- 1 s durch Variation des Anteils der Bis(2-dimethylaminoethyl)ether-Lösung (70 Gew.-% in Dipropylenglykol) (Katalysator 1) eingestellt.

Die Ergebnisse sind in Tabelle 1 zusammengefasst.

**Tabelle 1:**

| | Polyesterol 1 | Polyesterol 2 | Polyesterol 3 | Polyesterol 4 |
|---|---|---|---|---|
| Härtung | | | | |
| 2,5 min | 36 | 39 | 32 | 35 |
| 3 min | 47 | 47 | 39 | 42 |
| 4 min | 66 | 63 | 57 | 56 |
| Summe (2,5; 3 und 4 min) | 149 | 149 | 128 | 133 |
| | | | | |
| Sprödigkeit (subjektiv) | 6 | 2,5 | 6 | 2 |
| Bruch beim Bolzentest | 3 min | kein Bruch | 2,5 min | kein Bruch |
| | | | | |
| Katalysator 1 | 1 | 0,4 | 0,9 | 0,6 |

Man erkennt dabei deutlich, dass die erfindungsgemäßen Polyesterpolyole 2 und 4 die Sprödigkeit des Dämmstoffs herabsenken und die Eigenreaktivität der Systeme erhöhen, ohne einen negativen Effekt auf die Schaumhärtung zu haben.

### Beispiele 3 und 4 sowie Vergleichsbeispiele 3 und 4

### Herstellung von Polyurethan-Hartschaumstoffen (Variante 2)

Die Verschäumung erfolgte analog zur Variante 1, wobei das in der Variante 1 verwendete chemische Treibmittel Wasser in Variante 2 durch Ameisensäurelösung (85 Gew.-% in Wasser) als chemisches Treibmittel ersetzt wurde.

Die Komponenten wurden mittels eines Laborrührwerks intensiv vermischt. Die Rohdichte wurde dabei bei konstantem Pentangehalt von 15,0 Teilen durch Variation des Gehalts an Ameisensäurelösung (85 Gew.-% in Wasser) auf 32 +/- 1 g/L eingestellt. Die Abbindezeit wurde ferner auf 51 +/- 1 s durch Variation des Anteils der Bis(2-dimethylaminoethyl)ether-Lösung (70 Gew.-% in Dipropylenglykol; (Katalysator 1)) eingestellt.

Die Ergebnisse sind in Tabelle 2 zusammengefasst.

**Tabelle 2:**

| | Polyesterol 1 | Polyesterol 2 | Polyesterol 3 | Polyesterol 4 |
|---|---|---|---|---|
| Härtung | | | | |
| 2,5 min | 28 | 34 | 24 | 31 |
| 3 min | 36 | 42 | 31 | 38 |
| 4 min | 55 | 56 | 46 | 50 |
| Summe (2,5; 3 und 4 min) | 119 | 132 | 101 | 119 |
| | | | | |
| Sprödigkeit (subjektiv) | 6 | 4,5 | 6 | 3 |
| Bruch beim Bolzentest | 2,5 min | 4 min | 3 min | 5 min |
| | | | | |
| Katalysator 1 | 3,2 | 1,6 | 2,7 | 2,2 |

Man erkennt dabei deutlich, dass die erfindungsgemäßen Polyesterole 2 und 4 die Sprödigkeit des Dämmstoffs herabsenken und die Eigenreaktivität der Systeme erhöhen, ohne einen negativen Effekt auf die Schaumhärtung zu haben.

## Patentansprüche

1. Verfahren zur Herstellung von Polyurethan-Hartschaumstoffen durch Umsetzung von
A) mindestens einem Polyisocyanat,
B) mindestens einem Polyetheresterpolyol, erhältlich durch Veresterung von
b1) 10 bis 70 Mol-% einer Dicarbonsäurezusammensetzung, enthaltend
b11) 50 bis 100 Mol-%, bezogen auf die Dicarbonsäurezusammensetzung, einer oder mehrerer aromatischer Dicarbonsäuren oder Derivate derselben,
b12) 0 bis 50 Mol-%, bezogen auf die Dicarbonsäurezusammensetzung b1), einer oder mehrerer aliphatischer Dicarbonsäuren oder Derivate derselben,
b2) 2 bis 30 Mol-% einer oder mehrerer Fettsäuren oder Fettsäurederivate,
b3) 10 bis 70 Mol-% eines oder mehrerer aliphatischer oder cycloaliphatischer Diole mit 2 bis 18 C-Atomen oder Alkoxylate derselben,
b4) 2 bis 50 Mol-% eines Polyetherpolyols mit einer Funktionalität größer oder gleich 2 und einer OH-Zahl von 300 bis 1250 mg KOH/g, hergestellt durch Alkoxylierung eines Polyols mit einer Funktionalität größer 2,
jeweils bezogen auf die Gesamtmenge der Komponenten b1) bis b4), wobei sich die Komponenten b1) bis b4) zu 100 Mol-% addieren,
C) gegebenenfalls weiteren Polyesterpolyolen, die sich von denen der Komponente B) unterscheiden,
D) mindestens ein Polyetherolpolyol,
E) gegebenenfalls Flammschutzmitteln,
F) einem oder mehreren Treibmitteln,
G) Katalysatoren, und
H) gegebenenfalls weiteren Hilfsmitteln oder Zusatzstoffen,
wobei das Massenverhältnis der Summe der Komponenten B) und gegebenenfalls C) zu Komponente D) mindestens 7 beträgt.

2. Verfahren nach Anspruch 1, **dadurch gekennzeichnet, dass** das Massenverhältnis von Polyetheresterpolyolen B) zu den weiteren Polyesterpolyolen C), die sich von denen der Komponente B) unterscheiden, mindestens 0,1 beträgt.

3. Verfahren nach Anspruch 1 oder 2, **dadurch gekennzeichnet, dass** keine weiteren Polyesterpolyole C) mit umgesetzt werden.

4. Verfahren nach einem oder mehreren der Ansprüche 1 bis 3, **dadurch gekennzeichnet, dass** der Polyetheralkohol b4) eine Funktionalität von > 2 aufweist.

5. Verfahren nach einem oder mehreren der Ansprüche 1 bis 4, **dadurch gekennzeichnet, dass** der Polyetheralkohol b4) hergestellt ist durch Alkoxylierung eines Polyols, ausgewählt aus der Gruppe bestehend aus Sorbit, Pentaerythrit, Trimethylolpropan, Glycerin, Polyglycerin und deren Gemischen.

6. Verfahren nach einem oder mehreren der Ansprüche 1 bis 5, **dadurch gekennzeichnet, dass** der Polyetheralkohol b4) durch Alkoxylierung mit Ethylenoxid hergestellt ist.

7. Verfahren nach einem oder mehreren der Ansprüche 1 bis 6, **dadurch gekennzeichnet, dass** die Komponente b11) ein oder mehrere Verbindungen, ausgewählt aus der Gruppe bestehend aus Terephthalsäure, Dimethylterephthalat, Polyethylenterephthalat, Phthalsäure, Phthalsäureanhydrid und Isopththalsäure, enthält.

8. Verfahren nach einem oder mehreren der Ansprüche 1 bis 7, **dadurch gekennzeichnet, dass** die Dicarbonsäurezusammensetzung b1) keine aliphatischen Dicarbonsäuren b12) enthält.

9. Verfahren nach einem oder mehreren der Ansprüche 1 bis 8, **dadurch gekennzeichnet, dass** die Fettsäure oder das Fettsäurederivat b2) ausgewählt sind aus der Gruppe bestehend aus Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl sowie Fettsäuren, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

10. Verfahren nach Anspruch 9, **dadurch gekennzeichnet, dass** die Fettsäure oder das Fettsäurederivat b2) ausgewählt ist aus der Gruppe bestehend aus Ölsäure und Ölsäuremethylester.

11. Verfahren nach einem oder mehreren der Ansprüche 1 bis 10, **dadurch gekennzeichnet, dass** die aliphatischen oder cycloaliphatischen Diole b3) ausgewählt sind aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-Pentandiol und Alkoxylaten derselben.

12. Polyurethan-Hartschaumstoff erhältlich nach dem Verfahren gemäß einem oder mehreren der Ansprüche 1 bis 11.

13. Verwendung von Polyurethan-Hartschaumstoff nach Anspruch 12 zur Herstellung von Sandwichelementen mit starren oder flexiblen Deckschichten.

14. Polyolkomponente zur Herstellung von Polyurethan-Hartschaumstoffen enthaltend
10 bis 90 Gew.-% der Polyetheresterpolyole B),
0 bis 60 Gew.-% der weiteren Polyesterpoylole C),
0,1 bis 11 Gew.-% der Polyetherpolyole D),
2 bis 50 Gew.-% Flammschutzmittel E),
1 bis 45 Gew.-% Treibmittel F),
0,5 bis 10 Gew.-% Katalysatoren G),
0,5 bis 20 Gew.-% weitere Hilfs- und Zusatzstoffe H),
jeweils wie in einem oder mehreren der Ansprüche 1 bis 11 definiert, wobei das Massenverhältnis der Summe der Komponenten B) und C) zu Komponente D) mindestens 7 beträgt.

## Claims

1. A process for producing rigid polyurethane foams by reaction of
A) at least one polyisocyanate,
B) at least one polyetherester polyol obtainable by esterification of
b1) 10 to 70 mol% of a dicarboxylic acid composition comprising
b11) 50 to 100 mol%, based on the dicarboxylic acid composition, of one or more aromatic dicarboxylic acids or derivatives thereof,
b12) 0 to 50 mol%, based on said dicarboxylic acid composition b1), of one or more aliphatic dicarboxylic acids or derivatives thereof,
b2) 2 to 30 mol% of one or more fatty acids or fatty acid derivatives,
b3) 10 to 70 mol% of one or more aliphatic or cycloaliphatic diols having 2 to 18 carbon atoms or alkoxylates thereof,
b4) 2 to 50 mol% of a polyether polyol having a functionality of not less than 2 and an OH number of 300 to 1250 mg KOH/g, prepared by alkoxylating a polyol having a functionality of above 2,
all based on the total amount of components b1) to b4), wherein said components b1) to b4) sum to 100 mol%,
C) optionally further polyester polyols other than those of component B),
D) at least one polyetherol polyol,
E) optionally flame retardants,
F) one or more blowing agents,
G) catalysts, and
H) optionally further auxiliaries or admixture agents,
wherein the mass ratio of total components B) and optionally C) to component D) is at least 7.

2. The process according to claim 1 wherein the mass ratio of polyetherester polyols B) to the further polyester polyols C), which are different from those of component B), is at least 0.1.

3. The process according to claim 1 or 2 wherein no further polyester polyols C) are utilized.

4. The process according to one or more of claims 1 to 3 wherein the polyether alcohol b4) has a functionality of > 2.

5. The process according to one or more of claims 1 to 4 wherein said polyether alcohol b4) is prepared by alkoxylating a polyol selected from the group consisting of sorbitol, pentaerythritol, trimethylolpropane, glycerol, polyglycerol and mixtures thereof.

6. The process according to one or more of claims 1 to 5 wherein said polyether alcohol b4) is prepared by alkoxylation with ethylene oxide.

7. The process according to one or more of claims 1 to 6 wherein said component b11) comprises one or more compounds selected from the group consisting of terephthalic acid, dimethyl terephthalate, polyethylene terephthalate, phthalic acid, phthalic anhydride and isophthalic acid.

8. The process according to one or more of claims 1 to 7 wherein said dicarboxylic acid composition b1) comprises no aliphatic dicarboxylic acids b12).

9. The process according to one or more of claims 1 to 8 wherein said fatty acid or fatty acid derivative b2) is selected from the group consisting of castor oil, polyhydroxy fatty acids, ricinoleic acid, hydroxyl-modified oils, grapeseed oil, black cumin oil, pumpkin kernel oil, borage seed oil, soybean oil, wheat germ oil, rapeseed oil, sunflower seed oil, peanut oil, apricot kernel oil, pistachio oil, almond oil, olive oil, macadamia nut oil, avocado oil, sea buckthorn oil, sesame oil, hemp oil, hazelnut oil, primula oil, wild rose oil, safflower oil, walnut oil, and fatty acids, hydroxyl-modified fatty acids and fatty acid esters based on myristoleic acid, palmitoleic acid, oleic acid, vaccenic acid, petroselic acid, gadoleic acid, erucic acid, nervonic acid, linoleic acid, α- and γ-linolenic acid, stearidonic acid, arachidonic acid, timnodonic acid, clupanodonic acid and cervonic acid.

10. The process according to claim 9 wherein said fatty acid or fatty acid derivative b2) is selected from the group consisting of oleic acid and methyl oleate.

11. The process according to one or more of claims 1 to 10 wherein said aliphatic or cycloaliphatic diols b3) are selected from the group consisting of ethylene glycol, diethylene glycol, propylene glycol, 1,3-propanediol, 1,4-butanediol, 1,5-pentanediol, 1,6-hexanediol, 2-methyl-1,3-propanediol and 3-methyl-1,5-pentanediol and alkoxylates thereof.

12. A rigid polyurethane foam obtainable from the process according to one or more of claims 1 to 11.

13. The use of rigid polyurethane foam according to claim 12 for producing sandwich elements having rigid or flexible outer layers.

14. A polyol component for producing rigid polyurethane foams comprising
10 to 90 wt% of polyetherester polyols B),
0 to 60 wt% of further polyester polyols C),
0.1 to 11 wt% of polyether polyols D),
2 to 50 wt% of flame retardants E),
1 to 45 wt% of blowing agents F),
0.5 to 10 wt% of catalysts G),
0.5 to 20 wt% of further auxiliary and admixture agents H),
in each case as defined in one or more of claims 1 to 11, wherein the mass ratio of total components B) and C) to component D) is at least 7.

## Revendications

1. Procédé de fabrication de mousses dures de polyuréthane par mise en réaction de
A) au moins un polyisocyanate,
B) au moins un polyétherester-polyol, pouvant être obtenu par estérification de
b1) 10 à 70 % en moles d'une composition d'acides dicarboxyliques contenant
b11) 50 à 100 % en moles, par rapport à la composition d'acides dicarboxyliques, d'un ou de plusieurs acides dicarboxyliques aromatiques ou leurs dérivés,
b12) 0 à 50 % en moles, par rapport à la composition d'acides dicarboxyliques b1), d'un ou de plusieurs acides dicarboxyliques aliphatiques ou leurs dérivés,
b2) 2 à 30 % en moles d'un ou de plusieurs acides gras ou dérivés d'acides gras,
b3) 10 à 70 % en moles d'un ou de plusieurs diols aliphatiques ou cycloaliphatiques de 2 à 18 atomes C ou leurs alcoxylates,
b4) 2 à 50 % en moles d'un polyéther-polyol ayant une fonctionnalité supérieure ou égale à 2 et un indice OH de 300 à 1 250 mg KOH/g, fabriqué par alcoxylation d'un polyol ayant une fonctionnalité supérieure à 2,
à chaque fois par rapport à la quantité totale des composants b1) à b4), la somme des composants b1) à b4) étant de 100 % en moles,
C) éventuellement des polyester-polyols supplémentaires, différents de ceux du composant B),
D) au moins un polyéthérol-polyol,
E) éventuellement des agents ignifuges,
F) un ou plusieurs agents gonflants,
G) des catalyseurs et
H) éventuellement d'autres adjuvants ou additifs,
le rapport en masse entre la somme des composants B) et éventuellement C) et le composant D) étant d'au moins 7.

2. Procédé selon la revendication 1, **caractérisé en ce que** le rapport en masse entre les polyétheresterpolyols B) et les polyester-polyols supplémentaires C), qui sont différents de ceux du composant B), est d'au moins 0,1.

3. Procédé selon la revendication 1 ou 2, **caractérisé en ce qu'**aucun polyester-polyol supplémentaire C) n'est mis en réaction.

4. Procédé selon une ou plusieurs des revendications 1 à 3, **caractérisé en ce que** le polyéther-alcool b4) présente une fonctionnalité > 2.

5. Procédé selon une ou plusieurs des revendications 1 à 4, **caractérisé en ce que** le polyéther-alcool b4) est fabriqué par alcoxylation d'un polyol, choisi dans le groupe constitué par le sorbitol, le pentaérythritol, le triméthylolpropane, la glycérine, la polyglycérine et leurs mélanges.

6. Procédé selon une ou plusieurs des revendications 1 à 5, **caractérisé en ce que** le polyéther-alcool b4) est fabriqué par alcoxylation avec de l'oxyde d'éthylène.

7. Procédé selon une ou plusieurs des revendications 1 à 6, **caractérisé en ce que** le composant b11) contient un ou plusieurs composés, choisis dans le groupe constitué par l'acide téréphtalique, le téréphtalate de diméthyle, le téréphtalate de polyéthylène, l'acide phtalique, l'anhydride de l'acide phtalique et l'acide isophtalique.

8. Procédé selon une ou plusieurs des revendications 1 à 7, **caractérisé en ce que** la composition d'acides dicarboxyliques b1) ne contient pas d'acides dicarboxyliques aliphatiques b12).

9. Procédé selon une ou plusieurs des revendications 1 à 8, **caractérisé en ce que** l'acide gras ou le dérivé d'acide gras b2) est choisi dans le groupe constitué par l'huile de ricin, les polyhydroxyacides gras, l'acide ricinoléique, les huiles à modification hydroxyle, l'huile de pépin de raisin, l'huile de nigelle, l'huile de courge, l'huile de bourrache, l'huile de soja, l'huile de graines de blé, l'huile de colza, l'huile de tournesol, l'huile d'arachide, l'huile de noyau d'abricot, l'huile de pistache, l'huile d'amande, l'huile d'olive, l'huile de noix de macadamia, l'huile d'avocat, l'huile d'argousier, l'huile de sésame, l'huile de chanvre, l'huile de noisette, l'huile de primevère, l'huile de rose sauvage, l'huile de carthame, l'huile de noix, ainsi que les acides gras, les acides gras à modification hydroxyle et les esters d'acides gras à base d'acide myristoléique, d'acide palmitoléique, d'acide oléique, d'acide vaccénique, d'acide pétrosélinique, d'acide gadoléique, d'acide érucique, d'acide nervonique, d'acide linoléique, d'acide α- et γ-linolénique, d'acide stéaridonique, d'acide arachidonique, d'acide timnodonique, d'acide clupanodonique et d'acide cervonique.

10. Procédé selon la revendication 9, **caractérisé en ce que** l'acide gras ou le dérivé d'acide gras b2) est choisi dans le groupe constitué par l'acide oléique et l'ester méthylique de l'acide oléique.

11. Procédé selon une ou plusieurs des revendications 1 à 10, **caractérisé en ce que** les diols aliphatiques ou cycloaliphatiques b3) sont choisis dans le groupe constitué par l'éthylène glycol, le diéthylène glycol, le propylène glycol, le 1,3-propanediol, le 1,4-butanediol, le 1,5-pentanediol, le 1,6-hexanediol, le 2-méthyl-1,3-propanediol et le 3-méthyl-1,5-pentanediol et leurs alcoxylates.

12. Mousse dure de polyuréthane pouvant être obtenue par le procédé selon une ou plusieurs des revendications 1 à 11.

13. Utilisation d'une mousse dure de polyuréthane selon la revendication 12 pour la fabrication d'éléments en sandwich comprenant des couches supérieures rigides ou flexibles.

14. Composant polyol pour la fabrication de mousses dures de polyuréthane contenant
10 à 90 % en poids des polyétherester-polyols B),
0 à 60 % en poids des polyester-polyols supplémentaires C),
0,1 à 11 % en poids des polyéther-polyols D),
2 à 50 % en poids des agents ignifuges E),
1 à 45 % en poids des agents gonflants F),
0,5 à 10 % en poids des catalyseurs G),
0,5 à 20 % en poids des autres adjuvants et additifs H),
chacun tel que défini dans une ou plusieurs des revendications 1 à 11, le rapport en masse entre la somme des composants B) et C) et le composant D) étant d'au moins 7.
